# FASCICULE DE BREVET EUROPEEN

(11) **EP 3 350 479 B1**
(45) Date de publication et mention de la délivrance du brevet: **29.07.2020**
(21) Numéro de dépôt: 16774533.0
(22) Date de dépôt: 13.09.2016
(51) Int. Cl.: F16H 7/08

(54) **TENDEUR DE COURROIE A MONTAGE ET DEMONTAGE SUR UN ENSEMBLE DANS UN ENVIRONNEMENT CONFINE**
RIEMENSPANNER ZUM ANLEGEN AN UND ENTFERNEN VON EINER BAUGRUPPE IN EINEM GESCHLOSSENEN RAUM
BELT TENSIONER FOR FITTING ON AND REMOVING FROM AN ASSEMBLY IN A CONFINED SPACE

(30) Priorité: 17.09.2015 FR 1558734
(43) Date de publication de la demande: 25.07.2018
(73) Titulaire: PSA AUTOMOBILES S.A., 78300 Poissy (FR)
(72) Inventeur: LEBORGNE, Corentin, 78120 Rambouillet (FR)
(86) Numéro de dépôt international: PCT/FR2016/052297
(87) Numéro de publication internationale: WO 2017/046501

(56) Documents cités:
- EP-A1- 2 860 424
- DE-A1- 10 331 275
- DE-A1-102011 089 394

## Description

L'invention porte sur un tendeur de courroie configuré pour permettre son montage et démontage sur un ensemble dans un environnement confiné. Plus particulièrement, la présente invention traite aussi d'un tendeur de courroie d'accessoire avec un mode de fixation à l'ensemble permettant le montage ou démontage du tendeur dans un environnement confiné.

La présente invention trouve une application préférentielle dans le domaine de l'entraînement par courroie de transmission d'éléments pouvant être un alternateur, un compresseur de climatisation, une poulie de vilebrequin, ce qui n'est pas limitatif. Pour la tension d'une telle courroie, il est prévu un ou des dispositifs de maintien sous tension de cette courroie qui sont sous la forme d'au moins un tendeur présentant au moins un galet.

Dans ce qui va suivre, il va être pris comme exemple de courroie de transmission une courroie de façade accessoire d'un carter de moteur thermique d'un véhicule automobile. Ceci n'est cependant pas limitatif et la présente invention s'applique pour tout tendeur de courroie et toute courroie se trouvant dans un encombrement réduit.

D'une manière générale, une façade accessoire d'un carter d'un moteur à propulsion thermique d'un véhicule automobile présente un alternateur. Cet alternateur, avantageusement réversible, présente un rotor tournant autour d'un axe de rotation sensiblement horizontal. A l'extrémité de l'arbre correspondant à l'axe de rotation est montée une poulie d'alternateur en révolution autour dudit axe. Cette poulie fait partie d'un système de transmission par élément souple pour l'entraînement du vilebrequin du moteur thermique ou inversement en étant entraîné par le vilebrequin.

L'élément souple est avantageusement une courroie et un ou des tendeurs de courroie sont aussi prévus sur le parcours de cet élément souple. La courroie peut avoir plusieurs formes : plate, trapézoïdale, striée, etc. Aujourd'hui, la technologie la plus répandue pour l'élément souple est une courroie multi V, le nombre de V pouvant varier entre 3 et 8 selon le niveau de couple à entraîner et la durabilité attendue de l'élément souple. Une courroie multi V est une courroie striée dans le sens de la longueur. Une telle courroie assure une transmission par adhérence et présente, à largeur égale, une surface de contact optimale pour plus de puissance.

Comme précédemment mentionné, le système de transmission par élément souple peut nécessiter l'utilisation d'au moins un tendeur dynamique compensant l'allongement de la courroie au cours du temps ainsi que la perte de tension dans les brins de l'élément souple due au passage de couple sur les poulies. Le tendeur dynamique peut comprendre un ou plusieurs tendeurs en étant par exemple sous la forme d'un tendeur conventionnel à un galet qui va être décrit ci-après ou d'un tendeur pendulaire ou rotatif à excentrique, bien que d'autres types de tendeur mécanique existent également.

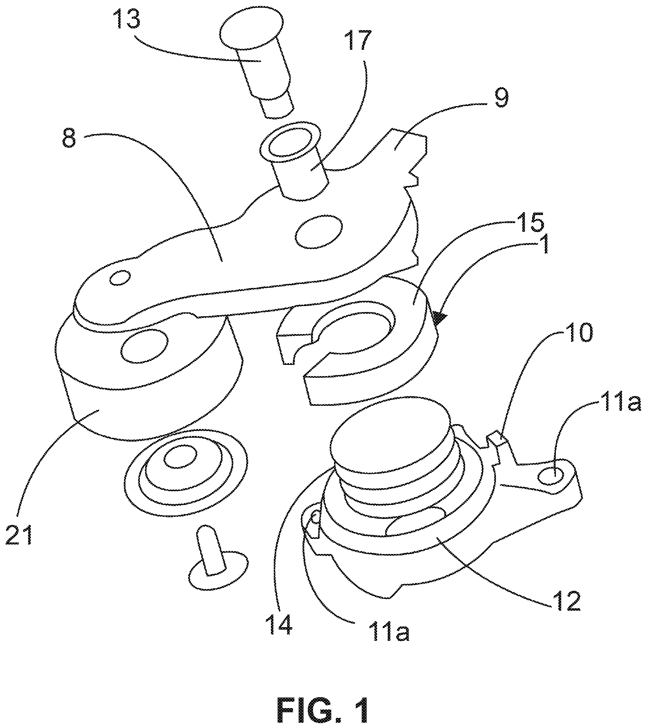

En regard de la figure 1, il est monté un galet tendeur 1 à un seul galet 21 conformément à l'état de la technique. De manière usuelle, pour ce galet tendeur 1, un galet 21 est monté sur un bras 8 pivotant, lui-même relié à un ressort de rappel 14, lui-même relié à la fixation du galet tendeur 1 sur la façade accessoire par une partie de support 12 destinée à être fixée à la façade.

Cette partie de support 12 peut comprendre au moins un évidement 11a en tant que point de fixation pour le passage d'un élément de fixation avec la façade accessoire. A la figure 1, deux évidements 11a sont visibles et ces évidements 11a sont conformés pour entourer l'élément de fixation sur toute sa périphérie.

Un élément d'amortissement 15 par friction, par exemple sous forme d'un patin d'amortissement, permet également de calmer la dynamique en rotation du bras 8. Le bras 8 peut tourner autour d'un axe de pivotement 13 passant à travers une douille 17 en balayant un certain angle jusqu'à arriver jusqu'à au moins une butée 10 en rotation qui peut être d'un seul tenant avec la partie de support 12. Pour assurer la butée, le bras 8 comprend un doigt d'armement 9 qui peut rentrer en contact avec la butée de fin de course 10.

Les éléments de fixation passant par l'évidement ou les évidements 11a sont sous la forme de vis et les évidements sont cylindriques. Pour une façade de carter, l'élément ou les éléments de fixation sont dirigés dans l'axe du moteur qui est l'axe du vilebrequin. Le montage d'un tendeur pendulaire ou rotatif sur une façade de carter se fait sensiblement de la même manière.

Le démontage des éléments de fixation d'un tendeur nécessite un recul d'un outil qui vient desserrer les éléments de fixation et un recul pour le retrait de chaque élément de fixation. La place libre pour ce recul n'est pas forcement disponible sous un capot d'un véhicule lors des opérations de maintenance en après-vente. Pour dégager entièrement la ou les éléments de fixation, le recul de l'outil doit être au moins la longueur en prise dans les filets de la partie de réception du tendeur incorporée à la façade augmentée de la largeur du support du tendeur appliqué contre la façade.

Cette longueur en prise peut donc être d'au moins 20 mm car la longueur des filets dans la partie de réception sur la façade doit être conséquente pour assurer une bonne fixation du tendeur sur la façade. Il s'ensuit que le montage ou le démontage d'un tendeur exige de laisser libre en regard de la façade une largeur de 20 mm, ce qui est très contraignant.

Le document US-A-2004/0084600 décrit la fixation d'un boîtier de type électronique sur un ensemble dans un véhicule automobile par des éléments de fixation traversant une portion du boîtier destinée à être appliquée contre la paroi de l'ensemble. La portion du boîtier est sous la forme d'un support présentant des ouvertures de passage pour un élément de fixation respectif permettant un coulissement du boîtier par rapport à ces éléments de fixation avant serrage complet de ces éléments.

Dans ce document, il n'y a aucune mention que le boîtier puisse être un tendeur de courroie de transmission ni que le boîtier se positionne sur l'ensemble dans un espace contraint pour lequel un dévissage complet des éléments de fixation n'est pas souhaitable ou même possible. De plus, aucun centrage supplémentaire du boîtier électronique autre que par les éléments de fixation par rapport à l'ensemble n'est prévu, ce qui ne convient pas à un tendeur sur lequel est exercée une grande pression en utilisation, ce qui peut le désaligner.

On connait encore du document EP2860424A1 décrivant un tendeur pour courroie de transmission correspondant au préambule de la revendication 1.

Par conséquent, le problème à la base de l'invention est, pour un tendeur de courroie de transmission, d'assurer le montage sur et/ou le démontage de ce tendeur d'un ensemble par au moins un élément de fixation, ce montage et/ou démontage devant requérir le moins de place possible dans l'environnement de l'ensemble du fait d'un espace de travail disponible réduit.

Pour atteindre cet objectif, il est prévu selon l'invention un tendeur pour courroie de transmission, lequel comprend au moins un galet et une partie de support traversée par au moins un évidement pour la réception d'un élément de fixation destiné à la fixation du tendeur sur un ensemble, caractérisé en ce que ledit au moins un évidement sur la partie de support est sous la forme d'une lumière ouverte débouchant sur un bord externe de la partie de support et en ce que la partie de support est traversée par au moins un logement pour le passage d'une goupille destinée à être insérée au moins partiellement dans l'ensemble.

L'effet technique est de permettre le démontage du tendeur d'accessoire dans un environnement très contraint, ce qui est le cas par exemple quand le tendeur est fixé à une façade accessoire d'un carter de moteur. Au lieu de dévisser complètement sur toute sa longueur l'élément ou les éléments de fixation, il suffit de les dévisser partiellement sur une longueur juste suffisante pour permettre la sortie de la ou des goupilles de leur logement respectif dans le tendeur.

A ce moment, il est alors possible de déplacer par coulissement le tendeur par rapport aux éléments de fixation, ceci grâce aux lumières dont chacune est associée avec un élément de fixation. L'espace devant rester libre pour le dévissage devenu seulement partiel est ainsi considérablement diminué et un tel démontage peut se faire dans un environnement très contraint.

Avantageusement, la partie de support présente au moins deux lumières, lesdites au moins deux lumières étant orientées similairement ou selon un arc de cercle de rayon et de centre similaire en direction du bord externe du support. La fixation du tendeur sur l'ensemble est de ce fait mieux répartie et plus solide. Orientée similairement signifie que lors d'un déplacement par coulissement du tendeur par rapport aux moyens de fixation, l'arrivée sur une portion de bord externe de la partie de support d'un élément de fixation se produit simultanément à l'arrivée sur une autre portion de bord externe de l'autre ou des autres éléments de fixation, afin qu'aucune lumière n'entoure plus son élément de fixation associé à la fin de ce déplacement. Orienté tangentiellement à un arc de cercle de centre et de rayon commun, l'arrivée sur une portion de bord externe de la partie de support d'un élément de fixation se produit simultanément à l'arrivée sur une autre portion de bord externe de l'autre ou des autres éléments de fixation, afin qu'aucune lumière n'entoure plus son élément de fixation associé à la fin de ce déplacement. De plus, aucune lumière ne fait obstruction à la sortie d'une autre lumière autour de son élément de fixation.

Avantageusement, la lumière ou chaque lumière forme un canal interne présentant une largeur correspondant à celle de l'élément de fixation augmentée d'un jeu suffisant pour permettre le guidage en coulissement du canal par rapport à l'élément de fixation. C'est ce canal qui délimite le coulissement du tendeur par rapport à chaque élément de fixation et le guide jusqu'à la sortie de la lumière débouchant sur le bord externe de la partie de support. Le tendeur est alors complètement désolidarisé de l'élément ou des éléments de fixation et en conséquence de l'ensemble.

Avantageusement, la partie de support est plane et la section du canal interne de la lumière ou de chaque lumière prise dans le plan de la partie de support présente une forme allongée rectiligne ou courbe. La forme du canal permet le guidage du tendeur en désolidarisation de l'élément ou des éléments de fixation et correspond au mouvement que doit suivre le tendeur sans interférence avec d'autres éléments présents dans l'environnement du tendeur.

Avantageusement, ledit au moins un logement pour le passage de la goupille présente une section circulaire ou polygonale.

Avantageusement, la section dudit au moins un logement correspond à celle de la goupille augmentée d'un jeu juste suffisant pour l'introduction de la goupille à l'intérieur du logement. Comme la goupille sert au centrage du tendeur sur l'ensemble, il est préférable de ne laisser qu'un jeu minimal entre chaque goupille et son logement associé sur le tendeur.

Avantageusement, le tendeur comporte un galet monté pivotant à une extrémité libre d'un bras relié à son extrémité opposée à la partie de support ou est un tendeur pendulaire ou rotatif comportant deux galets portés respectivement par une extrémité d'un support en forme de fer à cheval et solidaire de la partie de support. La présente invention est en effet applicable à tout type de tendeur de courroie de transmission.

La présente invention concerne aussi un ensemble portant au moins deux poulies entourées par une courroie de transmission, caractérisé en ce qu'au moins un tel tendeur est fixé sur une portion de réception portée par cet ensemble, la portion de réception étant traversée d'un alésage fileté pour la réception dudit au moins un élément de fixation muni d'une tête pressant contre la face du tendeur opposée à l'ensemble quand ledit au moins un élément de fixation est vissé dans l'alésage fileté, la portion de réception étant traversée d'une gorge pour la réception d'une portion de ladite au moins une goupille, le reste de ladite au moins une goupille faisant saillie de la gorge dans le logement respectif traversant le tendeur.

Avantageusement, l'ensemble est une façade accessoire d'un carter moteur de véhicule automobile, une poulie desdites au moins deux poulies étant associée à un alternateur et l'autre poulie étant associée à un vilebrequin du moteur.

L'invention concerne aussi un procédé de démontage d'un tendeur d'un tel ensemble, la partie de support du tendeur ayant été, lors du montage, appliquée contre la portion de réception de l'ensemble et ledit au moins un élément de fixation ayant été vissé dans l'alésage fileté de l'ensemble après avoir traversé le tendeur par ledit au moins un évidement sous forme d'une lumière, une portion de ladite au moins une goupille ayant été introduite dans la gorge de l'ensemble et le reste de ladite au moins une goupille faisant saillie dans le logement traversant le tendeur, le procédé de démontage étant caractérisé par les étapes suivantes :
- dévissage partiel dudit au moins un élément de fixation sur une longueur suffisante de l'alésage fileté afin d'effectuer un déplacement du tendeur en éloignement de l'ensemble juste suffisant pour permettre l'extraction du reste de ladite au moins une goupille hors du logement du tendeur,
- retrait et coulissement du tendeur dans un plan sensiblement parallèle au plan de la portion de réception de l'ensemble par rapport audit au moins un élément de fixation encore partiellement vissé dans l'alésage fileté de l'ensemble afin que ledit au moins un élément de fixation sorte de ladite au moins une lumière par le bord externe du support, le tendeur étant alors désolidarisé de l'ensemble.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique en perspective d'un tendeur selon l'état de la technique,
- les figures 2 et 3 sont des représentations schématiques d'une vue latérale d'un tendeur respectivement monté et démonté sur un ensemble, ceci selon l'état de la technique,
- les figures 4 et 5 sont des représentations schématiques en perspective et en vue de face d'un tendeur pendulaire représentant une forme de réalisation possible mais non limitative d'un tendeur selon la présente invention, des lumières permettant un coulissement du tendeur autour de ses moyens de fixation à l'ensemble étant visibles à ces figures,
- les figures 6 et 7 sont des représentations schématiques d'une vue latérale d'un tendeur respectivement monté et démonté sur un ensemble, ceci selon un mode de réalisation d'un tendeur selon la présente invention, l'élément de fixation visible à la figure 7 étant partiellement dévissé de l'ensemble pour permettre un retrait du tendeur par coulissement autour de cet élément de fixation.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

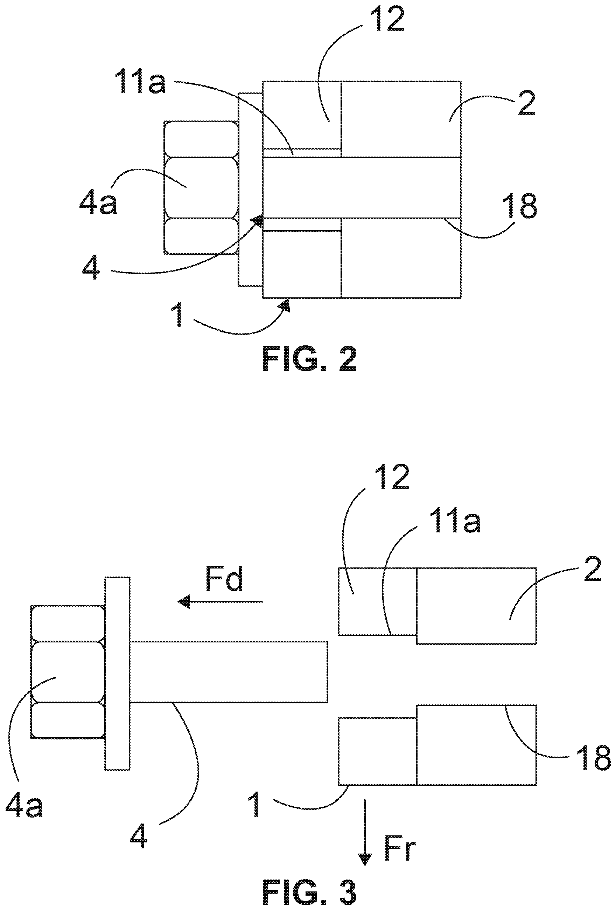

La figure 1 a déjà été décrite dans la partie introductive de la présente demande. Les figures 2 et 3 montrent un tendeur 1 fixé sur un ensemble 2 selon l'état de la technique. Le tendeur 1 est approprié pour tendre une courroie de transmission. Le tendeur 1 comprend au moins un galet et une partie de support 12 traversée par au moins un évidement 11a pour la réception d'un élément de fixation 4 destiné à la fixation du tendeur 1 sur un ensemble 2. Cet évidement 11a est cylindrique et entoure complètement l'élément de fixation 4 associé.

Selon cet état de la technique, pour le démontage du tendeur 1 de l'ensemble, il convient de dévisser entièrement l'élément de fixation 4 qui coopérait avec une portion filetée 18 portée à l'intérieur de l'ensemble 2. Il s'ensuit qu'un débattement de la longueur du filetage de l'élément de fixation 4 augmenté de la largeur de sa tête 4a et de l'épaisseur de la partie de support 12 du tendeur 1 doit être laissé libre en face de l'ensemble 2, ce qui n'est toujours pas possible.

Après dévissage complet de l'élément de fixation 4, ce qui le déplace dans la direction indiquée par la flèche Fd, la partie de support 12 peut être enlevée avantageusement dans le sens de la flèche Fr par coulissement sur l'ensemble 2 plutôt que par éloignement, pour diminuer l'espace de débattement.

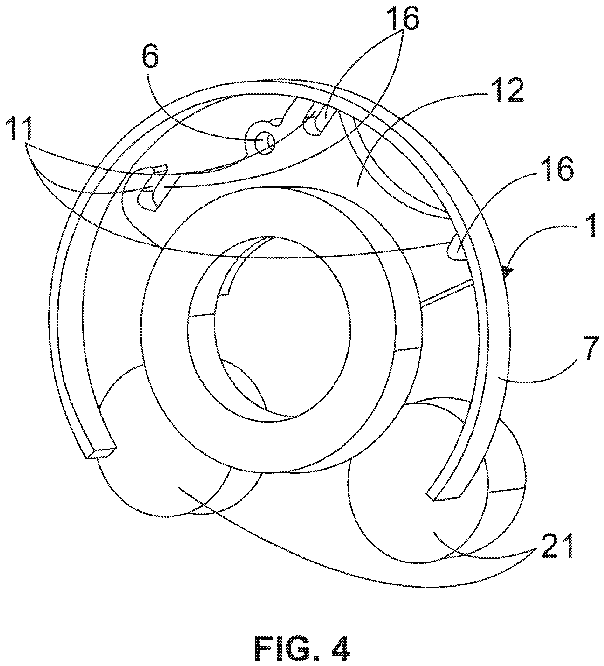

En se référant aux figures 4 à 7, selon l'invention, ledit au moins un évidement 11 sur la partie de support 12 du tendeur 1 est sous la forme d'une lumière ouverte débouchant sur un bord externe de la partie de support 12. Par lumière, il est entendu un logement ou un orifice débouchant donc présentant une sortie sur le contour de la partie de support 12, cette lumière pouvant avoir des formes diverses. D'autres appellations possibles de lumière pourraient être trou oblong, bossage ou boutonnière.

De plus, la partie de support 12 est traversée par au moins un logement 6 pour le passage d'une goupille 5 destinée à être insérée au moins partiellement dans l'ensemble 2. Etant donné qu'il peut y avoir une liberté de mouvement du fait de la lumière ou des lumières 11 du tendeur par rapport au(x) élément(s) de fixation 4 et donc une liberté de mouvement du tendeur 1 par rapport à l'ensemble 2, il convient de bloquer le tendeur 1 par rapport à l'ensemble 2.

Ceci est fait par la goupille 5 traversant le tendeur 1 de part en part dans son épaisseur et s'insérant partiellement dans l'ensemble 2 dans une gorge 3 aménagée dans cet ensemble 2. La ou les goupilles 5 effectuent une action de centrage pour compenser la perte de positionnement due à la plus grande étendue interne de l'évidement ou des évidements 11.

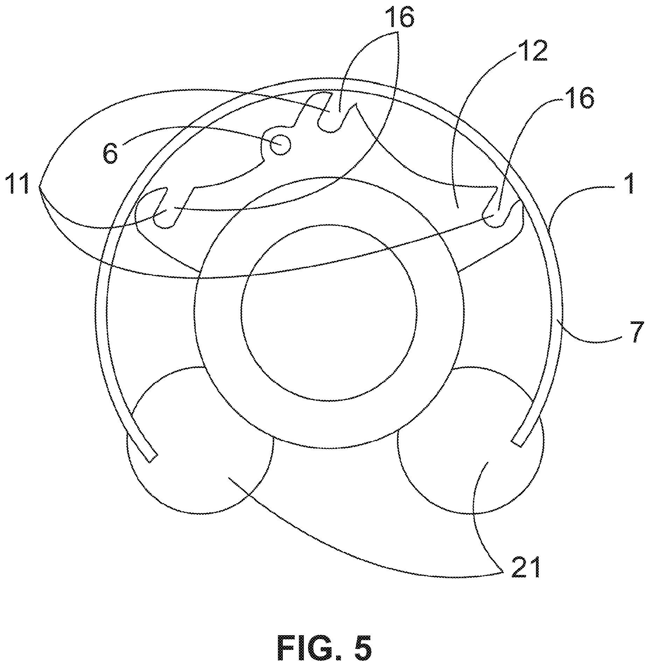

Comme il peut être vu aux figures 4 et 5, la partie de support 12 du tendeur 1 peut présenter au moins deux lumières 11, avantageusement trois à ces figures. Lesdites au moins deux lumières 11 sont orientées similairement en direction du bord externe du support 12 afin que ces lumières 11 puissent coulisser, par translation ou par rotation ou par une combinaison d'une rotation et d'une translation, autour de leur élément de fixation 4 respectif pour que l'élément ou les éléments de fixation 4 quittent en même temps les lumières 11 par leur embouchure respective et par le même mouvement de coulissement du support 12, ce qui provoque la désolidarisation du tendeur 1 avec l'élément ou les éléments de fixation 4 et en conséquence avec l'ensemble 2. Lesdites au moins deux lumières 11 sont orientées selon un arc de cercle de centre et de rayon commun en direction du bord externe du support 12 afin que ces lumières 11 puissent coulisser autour de leur élément de fixation 4 respectif pour que l'élément ou les éléments de fixation 4 quittent en même temps les lumières 11 par leur embouchure respective et par le même mouvement de coulissement du support 12, ce qui provoque la désolidarisation du tendeur 1 avec l'élément ou les éléments de fixation 4 et en conséquence avec l'ensemble 2.

Les lumières 11 ne s'étendent pas dans des sens opposés qui pourraient empêcher la sortie des éléments de fixation 4 de la partie de support 12 mais au contraire les lumières 11 sont conformées afin que tous les éléments de fixation 4 quittent leur lumière 11 respective simultanément lors du retrait du tendeur 1 de l'ensemble 2.

La lumière ou chaque lumière 11 peut former un canal 16 interne présentant une largeur correspondant à celle de l'élément de fixation 4 augmentée d'un jeu suffisant pour permettre le guidage en coulissement du canal 16 par rapport à l'élément de fixation 4.

De multiples formes et orientations pour la ou les lumières 11 sont possibles. Par exemple, quand la partie de support 12 est plane, la section du canal 16 interne de la lumière ou de chaque lumière 11 prise dans le plan de la partie de support 12 peut présenter une forme allongée rectiligne ou courbe. Le canal 16 interne peut former un U, un C ou tout autre forme adéquate.

Comme la ou les goupilles 5 effectuent le centrage du tendeur 1 par rapport à l'ensemble 2, le logement 6 porté par le tendeur 1 pour le passage de la ou de chaque goupille 5 peut présenter une section circulaire ou polygonale. La section et la forme du ou de chaque logement 6 correspondent donc à celle de la goupille 5 augmentée d'un jeu juste suffisant pour l'introduction de la goupille 5 à l'intérieur du logement 6.

La présente invention est applicable à tout type de tendeur de courroie de transmission devant être fixé sur un ensemble, avantageusement une façade accessoire d'un moteur de véhicule automobile.

Dans une première forme de réalisation préférentielle, le tendeur 1 comporte un galet 21 monté pivotant à une extrémité libre d'un bras 8 relié à son extrémité opposée à la partie de support 12, comme il a été montré à la figure 1 tout en comportant les caractéristiques essentielles de l'invention relatives à au moins une lumière 11 et un logement 6 pour une goupille, ces caractéristiques n'étant pas visibles à cette figure.

Dans une deuxième forme de réalisation préférentielle, le tendeur 1 est un tendeur pendulaire ou rotatif comportant deux galets 21 portés respectivement par une extrémité d'un support 7 en forme de fer à cheval et solidaire de la partie de support 12. Ceci est montré aux figures 4 et 5. Par exemple, le tendeur 1 de courroie de transmission selon la présente invention peut être utilisé dans un système d'arrêt et de redémarrage automatiques d'un véhicule automobile.

La présente invention concerne aussi un ensemble 2 portant au moins deux poulies entourées par une courroie de transmission avec au moins un tel tendeur 1 fixé sur une portion de réception portée par cet ensemble 2. Il peut y avoir plusieurs poulies et aussi plusieurs courroies de transmission sur cet ensemble 2 d'où la possibilité d'avoir plusieurs tendeurs 1.

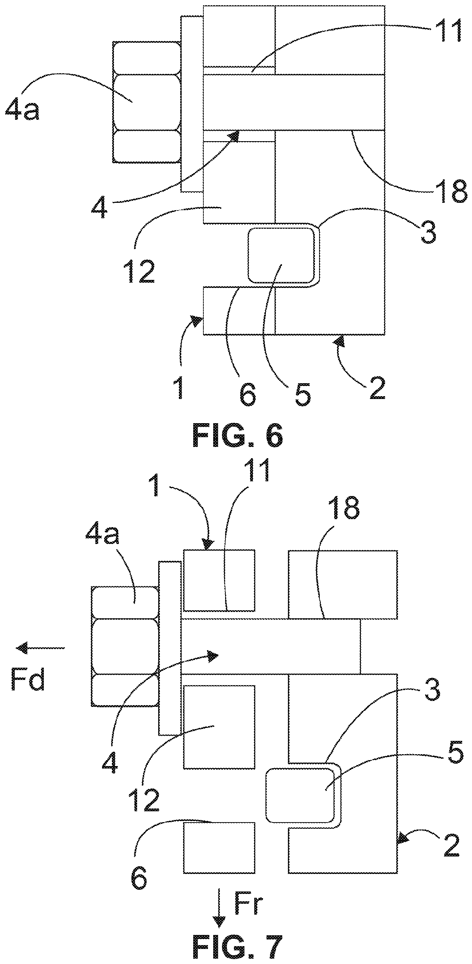

Comme il peut être vu aux figures 6 et 7, la portion de réception de l'ensemble 2 peut être traversée d'un alésage fileté 18 pour la réception de chaque élément de fixation 4, cet alésage 18 étant avantageusement borgne et correspondant à la longueur du filetage sur l'élément de fixation 4 associé.

L'élément de fixation ou chaque élément de fixation 4 peut être muni d'une tête 4a pressant contre la face du tendeur 1 opposée à l'ensemble 2 quand l'élément de fixation 4 est vissé dans l'alésage fileté 18. La portion de réception est traversée d'une gorge 3 pour la réception d'une portion de ladite au moins une goupille 5, le reste de ladite au moins une goupille 5 faisant saillie de la gorge 3 dans le logement 6 respectif traversant le tendeur 1.

La profondeur de la gorge 3 correspond à la longueur de la portion de la goupille 5 qu'on souhaite loger dans l'ensemble 2, afin que le fond de la gorge 3 fasse butée contre un enfoncement plus profond de la goupille 5, ce qui ne la ferait plus saillir de la gorge 3 en direction du tendeur 1.

La partie de support 12 du tendeur 1 est donc intercalée et pressée entre la tête 4a de l'élément de fixation 4 et la portion réceptrice de l'ensemble 2 quand l'élément de fixation 4 est serré. La tête 4a de l'élément de fixation 4 peut être de préférence hexagonale. Le positionnement dans le plan normal aux axes de l'élément ou des éléments de fixation 4 est fait par la ou les goupilles 5 en complément de l'élément ou des éléments de fixation 4.

De manière préférentielle, l'ensemble 2 est une façade accessoire d'un carter moteur de véhicule automobile, une poulie desdites au moins deux poulies étant associée à un alternateur et l'autre poulie étant associée à un vilebrequin du moteur.

Le but de la présente invention est essentiellement d'assurer le montage et le démontage d'un tendeur sur un ensemble 2 dans un espace contraint. Sans que cela soit limitatif, le montage du tendeur 1 peut se faire de la manière suivante.

Dans un espace non contraint, par exemple avant que l'ensemble 2 ne soit mis en position ou si l'espace est dégagé devant l'ensemble 2 du fait que d'autres pièces indépendantes du tendeur 1 ou de l'ensemble 2 ne sont pas encore montées dans l'environnement du tendeur 1 ou de l'ensemble 2, il est procédé au vissage de l'élément ou des éléments de fixation 4.

Cela nécessite de dégager toute la longueur des éléments de fixation devant l'ensemble 2 et cette fixation requiert de bénéficier d'une place disponible devant l'ensemble 2 pour la présentation de chaque élément de fixation 4 et son introduction dans l'alésage fileté 18 de l'ensemble 2.

Ensuite, il peut être procédé au montage du tendeur 1, le cas échéant, en dévissant partiellement l'élément ou les éléments de fixation 4 afin que le tendeur 1 puisse être introduit entre la portion réceptrice de l'ensemble 2 et la tête 4a de chaque élément de fixation 4. Au moins une goupille 5 a été introduite dans une gorge 3 de l'ensemble 2. En alternative, il est possible d'introduire la ou les goupilles 5, une fois le tendeur 1 positionné en début de fixation sur l'ensemble 2. Cela requiert cependant que chaque logement 6 du tendeur 1 le traverse de part en part.

L'élément ou les éléments de fixation 4 sont alors vissés complètement et le tendeur 1 est maintenu en place par l'action de ces éléments de fixation 4 et de la goupille 5 ou des goupilles, le tendeur 1 étant pressé entre la tête 4a de chaque élément de fixation 4 et la portion réceptrice de l'ensemble 2 en étant de plus centré par rapport à l'ensemble par l'action de chaque goupille 5.

Un autre aspect de l'invention concerne un procédé de démontage d'un tendeur 1 d'un tel ensemble. Lors du montage, la partie de support 12 du tendeur 1 avait été appliquée contre la portion de réception de l'ensemble 2 et l'élément ou chaque élément de fixation 4 avait été vissé dans l'alésage fileté 18 de l'ensemble 2 après avoir traversé le tendeur 1 par un évidement 11 respectif, sous forme d'une lumière.

De plus, une portion de ladite au moins une goupille 5 avait été introduite dans la gorge 3 de l'ensemble 2 et le reste de ladite au moins une goupille 5 faisait saillie dans le logement 6 du tendeur 1.

Le procédé de démontage comprend l'étape de dévissage partiel dudit au moins un élément de fixation 4 sur une longueur suffisante de l'alésage fileté 18 afin d'effectuer un déplacement du tendeur 1 en éloignement de l'ensemble 2 juste suffisant pour permettre l'extraction du reste de ladite au moins une goupille 5 hors du logement 6 du tendeur 1. Ceci permet de minimiser l'espace nécessaire pour le retrait du tendeur 1, ce déplacement en éloignement étant symbolisé par la flèche Fd.

L'étape suivante du procédé de démontage est le retrait par coulissement du tendeur 1 dans un plan sensiblement parallèle au plan de la portion de réception de l'ensemble 2.

Ce coulissement se fait par rapport audit au moins un élément de fixation 4 encore partiellement vissé dans l'alésage fileté 18 de l'ensemble 2 afin que ledit au moins un élément de fixation 4 sorte de ladite au moins une lumière 11 associée par le bord externe du support 12. A la fin de cette étape, le tendeur 1 est alors complètement désolidarisé de l'ensemble 2.

Un exemple non limitatif va maintenant être donné. Lors du démontage d'un tendeur 1 fixé à un ensemble par des éléments de fixation 4, selon la présente invention, les éléments de fixation 4 sont desserrés de juste la longueur en prise dans le logement 6 de la portion restante de la ou de chaque goupille 5 faisant saillie de la gorge 3 de l'ensemble 2. Cette longueur peut être de 2 à 4 mm et est à comparer avec 20 mm qui est la longueur totale d'un élément de fixation 4 pour un assemblage conventionnel.

L'élément ou les éléments de fixation 4 sont laissés en place toujours partiellement vissés dans l'alésage fileté 18 de l'ensemble 2. Même avec l'élément ou les éléments de fixation 4 non entièrement dévissés, selon la présente invention, le tendeur 1 peut être démonté de l'ensemble en faisant glisser le canal 16 de chaque lumière 17 par rapport à son élément de fixation 4 associé.

L'invention n'est nullement limitée aux modes de réalisation décrits et illustrés qui n'ont été donnés qu'à titre d'exemples.

## Revendications

1. Tendeur (1) pour courroie de transmission, lequel comprend au moins un galet (21) et une partie de support (12) traversée par au moins un évidement (11) pour la réception d'un élément de fixation (4) destiné à la fixation du tendeur (1) sur un ensemble (2), **caractérisé en ce que** ledit au moins un évidement (11) sur la partie de support (12) est sous la forme d'une lumière ouverte débouchant sur un bord externe de la partie de support (12) et **en ce que** la partie de support (12) est traversée par au moins un logement (6) pour le passage d'une goupille (5) destinée à être insérée au moins partiellement dans l'ensemble (2).

2. Tendeur (1) selon la revendication 1, dans lequel la partie de support (12) présente au moins deux lumières (11), lesdites au moins deux lumières (11) étant orientées similairement ou selon un arc de cercle de rayon et de centre similaire en direction du bord externe du support (12).

3. Tendeur (1) selon la revendication 1 ou 2, dans lequel la lumière ou chaque lumière (11) forme un canal (16) interne présentant une largeur correspondant à celle de l'élément de fixation (4) augmentée d'un jeu suffisant pour permettre le guidage en coulissement du canal (16) par rapport à l'élément de fixation (4).

4. Tendeur (1) selon la revendication 3, dans lequel la partie de support (12) est plane et la section du canal (16) interne de la lumière ou de chaque lumière (11) prise dans le plan de la partie de support (12) présente une forme allongée rectiligne ou courbe.

5. Tendeur (1) selon l'une quelconque des revendications précédentes, dans lequel ledit au moins un logement (6) pour le passage de la goupille (5) présente une section circulaire ou polygonale.

6. Tendeur (1) selon la revendication 5, dans lequel la section dudit au moins un logement (6) correspond à celle de la goupille (5) augmentée d'un jeu juste suffisant pour l'introduction de la goupille (5) à l'intérieur du logement (6).

7. Tendeur (1) selon l'une quelconque des revendications précédentes, lequel comporte un galet (21) monté pivotant à une extrémité libre d'un bras (8) relié à son extrémité opposée à la partie de support (12) ou est un tendeur pendulaire ou rotatif comportant deux galets (21) portés respectivement par une extrémité d'un support (7) en forme de fer à cheval et solidaire de la partie de support (12).

8. Ensemble (2) portant au moins deux poulies entourées par une courroie de transmission, **caractérisé en ce qu'**au moins un tendeur (1) selon l'une quelconque des revendications précédentes est fixé sur une portion de réception portée par cet ensemble (2), la portion de réception étant traversée d'un alésage fileté (18) pour la réception dudit au moins un élément de fixation (4) muni d'une tête (4a) pressant contre la face du tendeur (1) opposée à l'ensemble (2) quand ledit au moins un élément de fixation (4) est vissé dans l'alésage fileté (18), la portion de réception étant traversée d'une gorge (3) pour la réception d'une portion de ladite au moins une goupille (5), le reste de ladite au moins une goupille (5) faisant saillie de la gorge (3) dans le logement (6) respectif traversant le tendeur (1).

9. Ensemble (2) selon la revendication 8, lequel est une façade accessoire d'un carter moteur de véhicule automobile, une poulie desdites au moins deux poulies étant associée à un alternateur et l'autre poulie étant associée à un vilebrequin du moteur.

10. Procédé de démontage d'un tendeur (1) d'un ensemble selon l'une quelconque des revendications 8 ou 9, la partie de support (12) du tendeur (1) ayant été, lors du montage, appliquée contre la portion de réception de l'ensemble (2) et ledit au moins un élément de fixation (4) ayant été vissé dans l'alésage fileté (18) de l'ensemble (2) après avoir traversé le tendeur (1) par ledit au moins un évidement sous la forme d'une lumière (11), une portion de ladite au moins une goupille (5) ayant été introduite dans la gorge (3) de l'ensemble (2) et le reste de ladite au moins une goupille (5) faisant saillie dans le logement (6) traversant le tendeur (1), le procédé de démontage étant **caractérisé par** les étapes suivantes :
- dévissage partiel dudit au moins un élément de fixation (4) sur une longueur suffisante de l'alésage fileté (18) afin d'effectuer un déplacement du tendeur (1) en éloignement de l'ensemble (2) juste suffisant pour permettre l'extraction du reste de ladite au moins une goupille (5) hors du logement (6) du tendeur (1),
- retrait et coulissement du tendeur (1) dans un plan sensiblement parallèle au plan de la portion de réception de l'ensemble (2) par rapport audit au moins un élément de fixation (4) encore partiellement vissé dans l'alésage fileté (18) de l'ensemble (2) afin que ledit au moins un élément de fixation (4) sorte de ladite au moins une lumière (11) associée par le bord externe du support (12), le tendeur (1) étant alors désolidarisé de l'ensemble (2).

## Patentansprüche

1. Spanner (1) für den Übertragungsriemen, der mindestens eine Rolle (21) und ein Stützteil (12) umfasst, das von mindestens einer Aussparung (11) zur Aufnahme eines vorgesehenen Befestigungselements (4) gekreuzt ist zur Befestigung des Spanners (1) an einer Baugruppe (2), die **dadurch gekennzeichnet ist, dass** die mindestens eine Aussparung (11) am Stützteil (12) die Form einer offenen Lichtöffnung an einer Außenkante von aufweist das Stützteil (12) und dadurch, dass das Stützteil (12) von mindestens einem Gehäuse (6) für den Durchgang eines Stifts (5) gekreuzt ist, der zumindest teilweise in die Baugruppe (2).

2. Spanner (1) nach Anspruch 1, bei dem der Stützteil (12) mindestens zwei Lichter (11) aufweist, wobei die mindestens zwei Lichter (11) ähnlich oder in einem Bogen eines Radius und ausgerichtet sind ähnliches Zentrum in Richtung der Außenkante des Trägers (12).

3. Spanner (1) nach Anspruch 1 oder 2, wobei das Licht oder jedes Licht (11) einen inneren Kanal (16) mit einer Breite bildet, die der des Befestigungselements (4) entspricht, das um einen Abstand vergrößert wird ausreichend, um eine Gleitführung des Kanals (16) relativ zum Befestigungselement (4) zu ermöglichen.

4. Spanner (1) nach Anspruch 3, wobei der Stützteil (12) planar ist und der Abschnitt des Kanals (16) innerhalb des Lichts oder jedes Lichts (11) in der Ebene des Stützteils liegt (12) hat eine längliche gerade oder gekrümmte Form.

5. Spanner (1) nach einem der vorhergehenden Ansprüche, wobei das mindestens eine Gehäuse (6) für den Durchgang des Stifts (5) einen kreisförmigen oder polygonalen Abschnitt aufweist.

6. Spanner (1) nach Anspruch 5, wobei der Abschnitt des mindestens einen Gehäuses (6) dem des Stifts (5) entspricht, der um ein Spiel erhöht ist, das gerade zum Einführen des Stifts (5) in ausreichend ist das Innere des Gehäuses (6).

7. Spanner (1) nach einem der vorhergehenden Ansprüche, der eine Rolle (21) umfasst, die schwenkbar an einem freien Ende eines Arms (8) angebracht ist, der an seinem Ende gegenüber dem Stützteil (12) verbunden ist oder ist ein Pendel oder ein Drehspanner, umfassend zwei Rollen (21), die jeweils von einem Ende einer Stütze (7) in Form eines Hufeisens getragen und an dem Stützteil (12) befestigt sind.

8. Baugruppe (2), die mindestens zwei Riemenscheiben trägt, die von einem Übertragungsriemen umgeben sind, **dadurch gekennzeichnet, dass** mindestens ein Spanner (1) gemäß einem der vorhergehenden Ansprüche an einem von dieser Baugruppe getragenen Aufnahmeabschnitt befestigt ist (2), wobei der Aufnahmeabschnitt von einer Gewindebohrung (18) zum Aufnehmen des mindestens einen Befestigungselements (4) durchquert wird, das mit einem Kopf (4a) versehen ist, der gegen die dem Spanner gegenüberliegende Seite (1) drückt 'Baugruppe (2), wenn das mindestens eine Befestigungselement (4) in die Gewindebohrung (18) eingeschraubt ist, wobei der Aufnahmeabschnitt von einer Nut (3) zum Aufnehmen eines Abschnitts des Au durchquert wird mindestens einen Stift (5), wobei der Rest des mindestens einen Stifts (5) aus der Nut (3) in dem jeweiligen Gehäuse (6) herausragt, die durch den Spanner (1) verläuft.

9. Baugruppe (2) nach Anspruch 8, die eine Zubehörfront eines Kraftfahrzeugkurbelgehäuses ist, wobei eine Riemenscheibe der mindestens zwei Riemenscheiben einem Generator zugeordnet ist und die andere Riemenscheibe einer Kurbelwelle des Motors zugeordnet ist.

10. Verfahren zum Zerlegen eines Spanners (1) von einer Baugruppe nach einem der Ansprüche 8 oder 9, wobei das Stützteil (12) des Spanners (1) während der Montage gegen den Abschnitt aufgebracht wurde Aufnehmen der Baugruppe (2) und des mindestens einen Befestigungselements (4), das in die Gewindebohrung (18) der Baugruppe (2) eingeschraubt wurde, nachdem es mindestens durch den Spanner (1) geführt wurde eine Aussparung in Form eines Lumens (11), wobei ein Teil des mindestens einen Stifts (5) in die Nut (3) der Anordnung (2) eingeführt wurde und der Rest des mindestens einen Stifts (5) 5) Vorstehen in das Gehäuse (6), das durch den Spanner (1) verläuft, wobei der Demontageprozess durch die folgenden Schritte gekennzeichnet ist:
- teilweises Abschrauben des mindestens einen Befestigungselements (4) über eine ausreichende Länge der Gewindebohrung (18), um eine Verschiebung des Spanners (1) von der Baugruppe (2) weg zu bewirken, die gerade ausreicht, um die Herausziehen des Restes des mindestens einen Stifts (5) aus dem Gehäuse (6) des Spanners (1),
- Entfernen und Gleiten des Spanners (1) in einer Ebene, die im Wesentlichen parallel zur Ebene des Aufnahmeabschnitts der Baugruppe (2) relativ zu dem mindestens einen Befestigungselement (4) ist, das noch teilweise in die Gewindebohrung (18) eingeschraubt ist der Anordnung (2), so dass das mindestens eine Befestigungselement (4) aus dem mindestens einen Lumen (11) herauskommt, das der Außenkante des Trägers (12) zugeordnet ist, von dem dann der Spanner (1) getrennt wird das Set (2).

## Claims

1. Tensioner (1) for transmission belt, which comprises at least one roller (21) and a support part (12) crossed by at least one recess (11) for receiving a fixing element (4) intended to the fixing of the tensioner (1) on an assembly (2), **characterized in that** said at least one recess (11) on the support part (12) is in the form of an open light opening on an external edge of the support part (12) and **in that** the support part (12) is crossed by at least one housing (6) for the passage of a pin (5) intended to be inserted at least partially into the assembly (2).

2. Tensioner (1) according to claim 1, in which the support part (12) has at least two lights (11), said at least two lights (11) being oriented similarly or in an arc of a radius and similar center towards the outer edge of the support (12).

3. Tensioner (1) according to claim 1 or 2, wherein the light or each light (11) forms an internal channel (16) having a width corresponding to that of the fixing element (4) increased by a clearance sufficient to allow sliding guidance of the channel (16) relative to the fastening element (4).

4. Tensioner (1) according to claim 3, wherein the support part (12) is planar and the section of the channel (16) internal of the light or of each light (11) taken in the plane of the support part (12) has an elongated straight or curved shape.

5. Tensioner (1) according to any one of the preceding claims, wherein said at least one housing (6) for the passage of the pin (5) has a circular or polygonal section.

6. Tensioner (1) according to claim 5, wherein the section of said at least one housing (6) corresponds to that of the pin (5) increased by a play just sufficient for the introduction of the pin (5) to the interior of the housing (6).

7. Tensioner (1) according to any one of the preceding claims, which comprises a roller (21) pivotally mounted at a free end of an arm (8) connected at its end opposite to the support part (12) or is a pendulum or rotary tensioner comprising two rollers (21) carried respectively by one end of a support (7) in the shape of a horseshoe and secured to the support part (12).

8. Assembly (2) carrying at least two pulleys surrounded by a transmission belt, **characterized in that** at least one tensioner (1) according to any one of the preceding claims is fixed on a receiving portion carried by this assembly (2), the receiving portion being traversed by a threaded bore (18) for receiving said at least one fixing element (4) provided with a head (4a) pressing against the face of the tensioner (1) opposite to the 'assembly (2) when said at least one fixing element (4) is screwed into the threaded bore (18), the receiving portion being traversed by a groove (3) for receiving a portion of said au at least one pin (5), the rest of said at least one pin (5) projecting from the groove (3) in the respective housing (6) passing through the tensioner (1).

9. Assembly (2) according to claim 8, which is an accessory front of a motor vehicle crankcase, a pulley of said at least two pulleys being associated with an alternator and the other pulley being associated with a crankshaft of the engine.

10. A method of dismantling a tensioner (1) from an assembly according to any one of claims 8 or 9, the support part (12) of the tensioner (1) having been, during assembly, applied against the portion receiving the assembly (2) and said at least one fixing element (4) having been screwed into the threaded bore (18) of the assembly (2) after having passed through the tensioner (1) by said at least a recess in the form of a lumen (11), a portion of said at least one pin (5) having been introduced into the groove (3) of the assembly (2) and the rest of said at least one pin (5) projecting into the housing (6) passing through the tensioner (1), the disassembly process being **characterized by** the following steps:
- partial unscrewing of said at least one fixing element (4) over a sufficient length of the threaded bore (18) in order to effect a displacement of the tensioner (1) away from the assembly (2) just sufficient to allow the extracting the rest of said at least one pin (5) from the housing (6) of the tensioner (1),
- removal and sliding of the tensioner (1) in a plane substantially parallel to the plane of the receiving portion of the assembly (2) relative to said at least one fixing element (4) still partially screwed into the threaded bore (18) of the assembly (2) so that said at least one fixing element (4) comes out of said at least one lumen (11) associated by the external edge of the support (12), the tensioner (1) then being separated from the set (2).
